# EUROPEAN PATENT APPLICATION

(11) **EP 2 554 512 A1**
(43) Date of publication of application: **06.02.2013**
(21) Application number: 11762650.7
(22) Date of filing: 23.03.2011
(51) Int. Cl.: C01B 3/38, C01B 3/48, H01M 8/04, H01M 8/06

(54) **HYDROGEN PRODUCTION APPARATUS AND FUEL CELL SYSTEM**

(30) Priority: 30.03.2010 JP 2010078763
(71) Applicant: JX Nippon Oil & Energy Corporation, Chiyoda-ku Tokyo 100-8162 (JP)
(72) Inventor: HASHIMOTO, Yasushi, Tokyo 100-8162 (JP); GOTO, Akira, Tokyo 100-8162 (JP); IMAKI, Emi, Tokyo 100-8162 (JP)
(74) Representative: Grünecker, Kinkeldey, Stockmair & Schwanhäusser
(86) International application number: PCT/JP2011/057013
(87) International publication number: WO 2011/122418

(57) **Abstract**

A hydrogen production apparatus 1 includes a preferential oxidation unit 8 that preferentially oxidizes carbon monoxide in a reformed gas containing hydrogen, a vaporization flow path 33 that passes water to generate steam, and a gas flow path 34 through which the reformed gas passes. The gas flow path 34 is arranged between the preferential oxidation unit 8 and the vaporization flow path 33. The reformed gas passes through the gas flow path 34 and thereafter flows into the preferential oxidation unit 8.

## Description

### Technical Field

The present invention relates to a hydrogen production apparatus and a fuel cell system.

### Background Art

As a conventional hydrogen production apparatus, the one that includes a preferential oxidation unit for preferentially oxidizing carbon monoxide in a reformed gas generated by reforming a raw material such as hydrocarbon is known (see, for example, Patent Literature 1). An external heating unit such as a heater is generally used to control the temperature of the preferential oxidation unit. However, for example, in a hydrogen production apparatus in which a water vaporization unit for generating steam is arranged at a position adjacent to an inner circumferential side of a tubular preferential oxidation unit, the temperature of the preferential oxidation unit can be controlled by the temperature of water supplied to the water vaporization unit, without using a heating unit.

### Citation List

### Patent Literature

Patent Literature 1: Japanese Patent Application Laid-Open Publication 2009-280408

### Summary of Invention

### Technical Problem

Here, in the hydrogen production apparatus as described above, a flow path through which water or steam pass is provided at a position adjacent to the preferential oxidation unit. Thus, if the temperature of water in the flow path is low, the temperature of a preferential oxidation catalyst in the preferential oxidation unit is decreased. If the temperature of the preferential oxidation catalyst becomes too low, oxidation of the preferential oxidation catalyst is degraded thereby reducing the lifetime of the catalyst. If a proper cooling structure for the preferential oxidation unit is not provided, the temperature of the preferential oxidation catalyst becomes high, so that a methanation reaction of carbon monoxide and carbon dioxide proceeds to abruptly increase the temperature above the heat-resistant temperature of the member. Thus, it has been demanded to keep the temperature of the preferential oxidation unit at an optimum temperature.

An object of the present invention is therefore to provide a hydrogen production apparatus and a fuel cell system in which the temperature of a preferential oxidation unit can be kept at an optimum temperature with a simple structure without using an external heating unit such as a heater.

### Solution to Problem

A hydrogen production apparatus includes a preferential oxidation unit preferentially oxidizing carbon monoxide in a reformed gas containing hydrogen, a vaporization flow path passing water to generate steam, and a gas flow path through which the reformed gas passes. The gas flow path is arranged between the preferential oxidation unit and the vaporization flow path. The reformed gas passes through the gas flow path and thereafter flows into the preferential oxidation unit.

In the hydrogen production apparatus, the gas flow path through which the reformed gas passes is arranged between the vaporization flow path for passing water to generate steam and the preferential oxidation unit. In such a configuration, the preferential oxidation unit is not in direct contact with the vaporization flow path through which water passes, and the gas flow path can function as a heating medium. This prevents the temperature of a preferential oxidation catalyst in the preferential oxidation unit from becoming too low. Furthermore, the gas flow path allows pass of the reformed gas to be supplied to the preferential oxidation unit, that is, the inlet gas of the preferential oxidation unit. Accordingly, the reformed gas as the inlet gas of the preferential oxidation unit supplies heat to water or steam in the vaporization flow path to be cooled if the reformed gas is hotter than necessary while being kept at a proper temperature with water or steam in the vaporization flow path so as not to be colder than necessary. Accordingly, the reformed gas that has passed through the gas flow path is supplied to the preferential oxidation unit in a state of being kept at an optimum temperature. As described above, in the hydrogen production apparatus, the temperature of the preferential oxidation unit can be kept at an optimum temperature with a simple structure without using an external heating unit such as a heater, thereby prolonging the lifetime of the preferential oxidation catalyst.

The hydrogen production apparatus may further include an exhaust gas flow path through which an exhaust gas from a burner for use to generate the reformed gas. The exhaust gas flow path may be arranged at a position adjacent to the vaporization flow path on a side opposite to the gas flow path. Since the exhaust gas flow path is arranged at a position adjacent to the vaporization flow path, water in the vaporization flow path can receive heat from the high-temperature exhaust gas and can vaporize efficiently. Furthermore, the vaporization flow path can keep the reformed gas at an optimum temperature reliably without overcooling the reformed gas in the gas flow path.

The hydrogen production apparatus may further include a shift unit removing carbon monoxide in the reformed gas through a shift reaction, and an air supply unit supplying air to the reformed gas directed from the shift unit to the preferential oxidation unit. The shift unit may include an outlet discharging the reformed gas after the shift reaction. The air supply unit may supply the air to the reformed gas flowing out of the outlet from a direction that opposes a flow of the reformed gas. The reformed gas with carbon monoxide removed through the shift reaction is collected at the outlet when flowing out of the shift unit. Here, the air supply unit can supply the air to the reformed gas collected at the outlet. Accordingly, the air and the reformed gas can be mixed efficiently. Furthermore, since the air supply unit supplies the air from the direction that opposes the flow of the reformed gas, the reformed gas collides against the air and mixes with the air even more efficiently.

A fuel cell system includes the hydrogen production apparatus as described above and a fuel cell stack generating power using the reformed gas generated by the hydrogen production apparatus.

The fuel cell system includes the hydrogen production apparatus as described above and therefore achieves the aforementioned effect of keeping the temperature of the preferential oxidation unit at an optimum temperature with a simple structure without using an external heating unit such as a heater.

### Advantageous Effects of Invention

According to the present invention, the temperature of the preferential oxidation unit can be kept at an optimum temperature with a simple structure without using an external heating unit such as a heater. Brief Description of Drawings

[Fig. 1] Fig. 1 is a schematic block diagram partially illustrating a fuel cell system according to an embodiment.
[Fig. 2] Fig. 2 is a schematic front end view illustrating a hydrogen production apparatus in Fig. 1.
[Fig. 3] Fig. 3 is an enlarged view of a configuration around a preferential oxidation unit illustrated in Fig. 2.
[Fig. 4] Fig. 4 is a block diagram illustrating a flow of heat around the preferential oxidation unit illustrated in Fig. 3.
[Fig. 5] Fig. 5 is a schematic front end view illustrating another example of the hydrogen production apparatus in Fig. 1. Description of Embodiments

In the following, preferred embodiments of the present invention will be described in detail with reference to the figures. It is noted that in the following description, the same or corresponding elements are denoted with the same reference signs, and an overlapping description is omitted. The terms "up" and "down" correspond to the upper and lower directions in the drawings and are given for the sake of convenience.

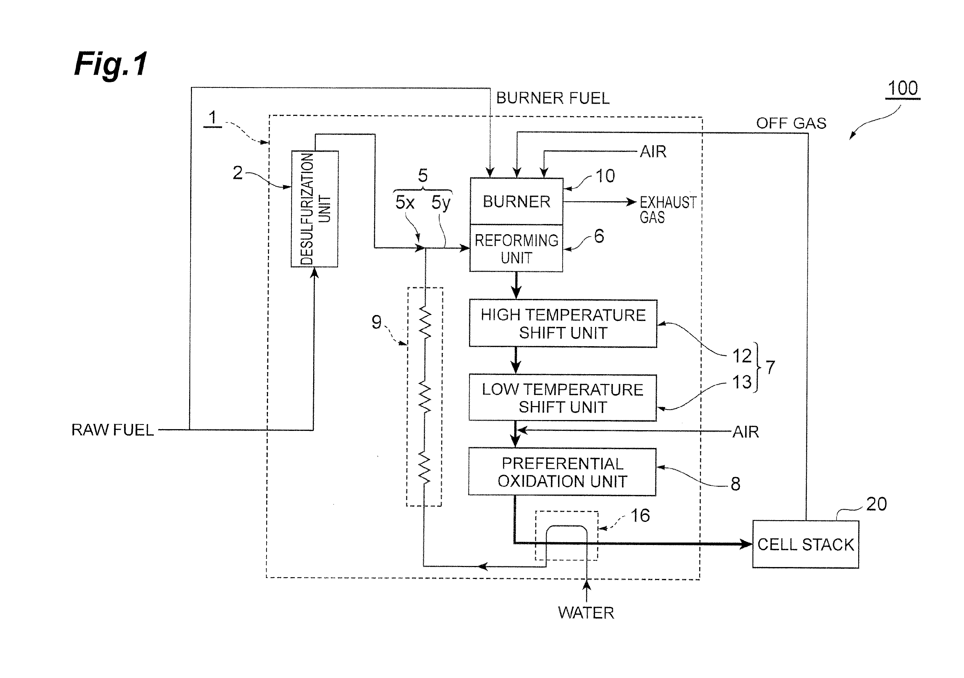

Fig. 1 is a schematic block diagram partially illustrating a fuel cell system according to an embodiment. As illustrated in Fig. 1, a hydrogen production apparatus (fuel processing system (FPS)) 1 is used, for example, as a hydrogen supply source in a fuel cell system 100 for home use. The hydrogen production apparatus 1 here uses petroleum-derived hydrocarbon as a raw fuel and supplies a reformed gas containing hydrogen to a cell stack (fuel cell stack) 20.

Examples of the raw fuel used include alcohols, ethers, biofuel, natural gas, and city gas. Examples of the petroleum-derived hydrocarbon used as a raw fuel include kerosene, LP gas, naphtha, and light oil. A variety of cells including a polymer electrolyte fuel cell, an alkaline cell, a phosphoric acid fuel cell, a molten carbonate fuel cell, and a solid oxide fuel cell can be used for the cell stack 20.

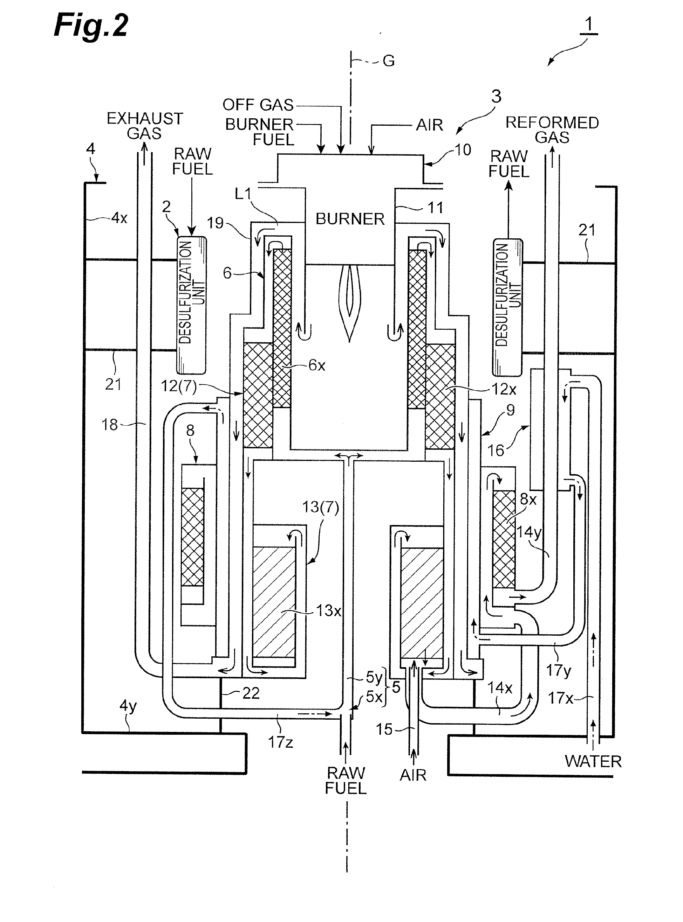

Fig. 2 is a schematic front end view illustrating a hydrogen production apparatus in Fig. 1. As illustrated in Figs. 1 and 2, the hydrogen production apparatus 1 includes a desulfurization unit 2 having a cylindrical outer shape with an axis G as the center axis and a main unit 3 having a cylindrical outer shape with the axis G as the center axis. The desulfurization unit 2 and the main unit 3 are accommodated in a housing 4. A powdery heat insulator (not illustrated) is filled in the housing 4 around the desulfurization unit 2 and the main unit 3 to insulate them. The desulfurization unit 2 may be installed outside the housing 4.

The desulfurization unit 2 desulfurizes a raw fuel externally introduced with a desulfurization catalyst to remove sulfur components and supplies the raw fuel thus desulfurized to a feed unit 5 described later. The desulfurization unit 2 is fixed to a side plate 4x of the housing 4 with a pipe 21 and is held to surround an upper portion of the main unit 3 with a predetermined gap. The main unit 3 includes the feed unit 5, a reforming unit 6, a shift unit 7, a preferential oxidation unit 8, and a vaporization unit 9, which are integrally assembled. The main unit 3 is fixed and held on a floor plate 4y of the housing 4 with a tubular stay 22.

The feed unit 5 mixes the raw fuel desulfurized by the desulfurization unit 2 with steam and supplies the mixture to the reforming unit 6. Specifically, the feed unit 5 includes a mixing unit 5x for combining and mixing the raw fuel and steam to generate a mixture gas (mixture fluid) and a mixture gas flow path 5y for passing the mixture gas to the reforming unit 6.

The reforming (SR: Steam Reforming) unit 6 generates a reformed gas by steam-reforming the mixture gas supplied from the feed unit 5 with a reforming catalyst (reforming catalyst unit) 6x and supplies the reformed gas to the shift unit 7. The reforming unit 6 has a cylindrical outer shape with the axis G as the center axis and is provided at the upper end side of the main unit 3 so as to be located in the tube of the desulfurization unit 2. In the reforming unit 6, a burner 10 is used as a heat source for heating the reforming catalyst 6x of the reforming unit 6 because the reforming reaction requires high temperatures and is an endothermic reaction.

In the burner 10, a raw fuel is externally supplied as a burner fuel and burnt. The burner 10 is mounted such that flame by the burner 10 is surrounded with a combustion tube 11 provided at an upper end portion of the main unit 3 with the axis G as the center axis. In the burner 10, part of the raw fuel desulfurized by the desulfurization unit 2 may be supplied as a burner fuel and burnt.

The shift unit 7 is to reduce a carbon monoxide concentration (CO concentration) in the reformed gas supplied from the reforming unit 6, and converts carbon monoxide into hydrogen and carbon dioxide through a shift reaction of carbon monoxide in the reformed gas. The shift unit 7 here can perform the shift reaction in two separate stages and has a high temperature shift (HTS) unit 12 that performs a high temperature shift reaction that is a shift reaction at high temperatures (for example, from 400°C to 600°C), and a low temperature shift (LTS) unit 13 that performs a low temperature shift reaction that is a shift reaction at low temperatures (for example, from 150°C to 350°C) lower than the temperatures in the high temperature shift reaction. However, the high temperature shift unit 12 is not necessarily provided.

The high temperature shift unit 12 subjects carbon monoxide in the reformed gas supplied from the reforming unit 6 to a high temperature shift reaction with a high temperature shift catalyst 12x to reduce the CO concentration in the reformed gas. The high temperature shift unit 12 has a cylindrical outer shape with the axis G as the center axis and is arranged adjacent to and radially outside the reforming unit 6 such that the high temperature shift catalyst 12x surrounds a lower end portion of the reforming catalyst 6x. The high temperature shift unit 12 supplies the reformed gas with a reduced CO concentration to the low temperature shift unit 13.

The low temperature shift unit 13 subjects carbon monoxide in the reformed gas subjected to a high temperature shift reaction in the high temperature shift unit 12, to a low temperature shift reaction with a low temperature shift catalyst 13x to reduce the CO concentration in the reformed gas. The low temperature shift unit 13 has a cylindrical outer shape with the axis G as the center axis and is disposed on the lower end side of the main unit 3. The low temperature shift unit 13 supplies the reformed gas with a reduced CO concentration to the preferential oxidation unit 8 through a reformed gas piping 14x.

The preferential oxidation (PROX) unit 8 further reduces the CO concentration in the reformed gas subjected to a low temperature shift reaction in the low temperature shift unit 13. This is because if high-concentration carbon monoxide is supplied to the cell stack 20, the catalyst in the cell stack 20 is poisoned and significantly degraded in performance. Specifically, the preferential oxidation unit 8 promotes a reaction between carbon monoxide in the reformed gas and the air introduced through an air piping 15 with a preferential oxidation catalyst 8x thereby to preferentially oxidize the carbon monoxide and convert it into carbon dioxide without oxidizing hydrogen in the reformed gas. The preferential oxidation unit 8 has a cylindrical outer shape with the axis G as the center axis and is disposed so as to form the outermost circumferential side of the main unit 3 from the lower end toward the upper end of the main unit 3 by a predetermined length.

The preferential oxidation unit 8 discharges the reformed gas with a further reduced CO concentration to the outside through a reformed gas piping 14y provided with a heat exchange unit 16. The heat exchange unit 16 performs heat exchange between the reformed gas passing in the reformed gas piping 14y and water externally introduced through a water piping 17x and supplies the water to the vaporization unit 9 through a water piping 17y.

The vaporization unit 9 stores therein the water supplied from the heat exchange unit 16 and generates steam by vaporizing the water with the heat moved from the low temperature shift unit 13 and the preferential oxidation unit 8 (obtained by cooling the low temperature shift unit 13 and the preferential oxidation unit 8) and with the heat of exhaust gas from the burner 10. The vaporization unit 9 is a jacket type and has a cylindrical shape with the axis G as the center axis. The vaporization unit 9 is disposed so as to be located radially outside the high temperature shift unit 12 and the low temperature shift unit 13 and radially inside the preferential oxidation unit 8 (in other words, between the shift unit 7 and the preferential oxidation unit 8). The vaporization unit 9 supplies the generated steam to the mixing unit 5x of the feed unit 5 through a steam piping 17z.

In this hydrogen production apparatus 1, first, at least one of the burner fuel and off gas from the cell stack 20 (residual gas not used for the reaction in the cell stack 20) and the air are supplied to the burner 10 and burnt. This combustion heats the reforming catalyst 6x. Then, the exhaust gas from the burner 10 passes through an exhaust gas flow path L1 and a gas piping 18 and exhausted to the outside.

Meanwhile, the raw fuel desulfurized in the desulfurization unit 2 and the steam from the vaporization unit 9 are mixed in the mixing unit 5x to generate a mixture gas. The mixture gas is supplied to the reforming unit 6 through the mixture gas flow path 5y and steam-reformed with the reforming catalyst 6x. A reformed gas is thus generated. Then, the shift unit 7 reduces the carbon monoxide concentration of the generated reformed gas to, for example, about a few thousands of ppm and then the preferential oxidation unit 8 reduces the carbon monoxide concentration of the reformed gas to about 10 ppm or lower, and the resulting reformed gas is thereafter cooled by the heat exchange unit 16 and introduced to the cell stack 20 on the following stage.

In the present embodiment, in order to suitably perform a catalytic reaction with each catalyst 6x, 12x, 13x, and 8x, for example, the temperature of each section is set as follows. Specifically, the temperature of the mixture gas flowing into the reforming unit 6 is set from about 300°C to 550°C. The temperature of the reformed gas flowing out of the reforming unit 6 is set from 550°C to 800°C. The temperature of the reformed gas flowing into the high temperature shift unit 12 is set from 400°C to 600°C. The temperature of the reformed gas flowing out of the high temperature shift unit 12 is set from 300°C to 500°C. The temperature of the reformed gas flowing into the low temperature shift unit 13 is set from 150°C to 350°C. The temperature of the reformed gas flowing out of the low temperature shift unit 13 is set from 150°C to 250°C. The temperature of the reformed gas flowing into the preferential oxidation unit 8 is set from 90°C to 210°C (from 120°C to 190°C).

A peripheral configuration of the low temperature shift unit 13 and the preferential oxidation unit 8 in the present embodiment will now be described in more details.

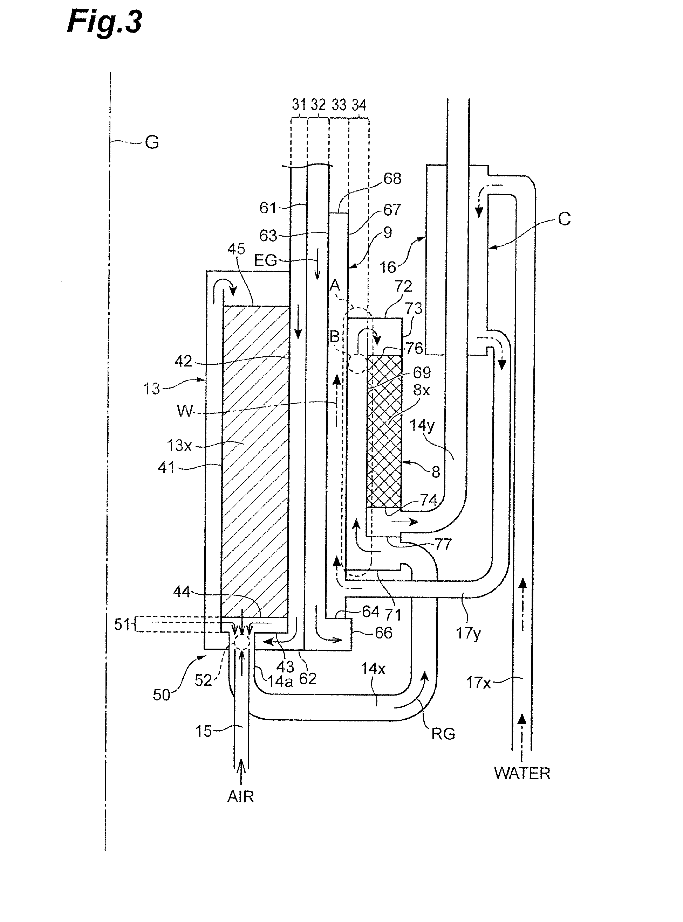

Fig. 3 is an enlarged view of a configuration around the preferential oxidation unit illustrated in Fig. 2. As illustrated in Fig. 3, a carbon monoxide removal structure in the hydrogen production apparatus 1 in the present embodiment includes the low temperature shift unit 13, a shift reaction inlet gas flow path 31, an exhaust gas flow path 32, a water vaporization flow path 33, a preferential oxidation inlet gas flow path 34, and the preferential oxidation unit 8 in this order from the axis G toward the outer circumferential side. The low temperature shift unit 13, the shift reaction inlet gas flow path 31, the exhaust gas flow path 32, the water vaporization flow path 33, the preferential oxidation inlet gas flow path 34, and the preferential oxidation unit 8 are all formed in a cylindrical shape having the axis G as the center axis and arranged radially adjacent to each other.

The low temperature shift unit 13 has a peripheral wall 41, a peripheral wall 42, a lower end wall 43, a punching plate 44, a punching plate 45, and a low temperature shift catalyst 13x. The peripheral wall 41 and the peripheral wall 42 have a cylindrical shape (circular tubular shape) with the axis G as the center axis. A gap to be filled with the low temperature shift catalyst 13x is formed between the peripheral wall 41 and the peripheral wall 42. The lower end wall 43 is shaped like a disk extending radially and is continuous to the respective lower ends of the peripheral wall 41 and the peripheral wall 42 to close the lower side of the low temperature shift unit 13. The peripheral wall 42 extends further above the peripheral wall 41. The punching plate 44 is shaped like a disk extending radially and is provided between the peripheral wall 41 and the peripheral wall 42 at a distance from the lower end wall 43 upward. The punching plate 45 is shaped like a disk extending radially and is provided between the peripheral wall 41 and the peripheral wall 42 at the upper end side of the peripheral wall 41. The low temperature shift catalyst 13x is filled in a space formed with the peripheral wall 41, the peripheral wall 42, and the punching plate 44, and the punching plate 45. The low temperature shift unit 13 has an outlet 52 for discharging the reformed gas after the shift reaction. The low temperature shift unit 13 may be configured without punching plates. This low temperature shift unit 13 has a mixing structure 50 on the lower side thereof for efficiently mixing the reformed gas after the shift reaction and the air.

The mixing structure 50 is configured with an internal space 51, the out let 52, the reformed gas piping 14x, and the air piping (air supply unit) 15. The internal space 51 is an annular space formed between the lower end wall 43 and the punching plate 44. The internal space 51 can efficiently collect the reformed gas after the shift reaction at the outlet 52. The outlet 52 is a through hole formed at the lower end wall 43 of the low temperature shift unit 13. The outlet 52 can collect the reformed gas after the shift reaction in one place because the outlet 52 is formed only at one place in the lower end wall 43. The reformed gas piping 14x is a pipe connected to the outlet 52. The reformed gas piping 14x allows the reformed gas after the shift reaction to pass to the preferential oxidation inlet gas flow path 34. The reformed gas piping 14x extends from the lower side to the upper side of the low temperature shift unit 13 with the axis G as the center axis and includes a pipe portion 14a connected to the outlet 52. The air piping 15 has a tip end portion inserted into the reformed gas piping 14x. The tip end portion of the air piping 15 is arranged coaxially with the pipe portion 14a in the pipe portion 14a of the reformed gas piping 14x and extends upward toward the outlet 52.

With such a configuration, the outlet 52 can collect the reformed gas after the shift reaction in one place and discharge the reformed gas downward to the inside of the pipe portion 14a of the reformed gas piping 14x. The air piping 15 can supply the air, from the lower side to the upper side (that is, from the direction that opposes the flow of the reformed gas), to the reformed gas passing through the outlet 52. Accordingly, the mixing structure 50 can efficiently mix the reformed gas after the shift reaction and the air in the vicinity of the outlet 52. The location where the reformed gas and the air are mixed is not specifically limited and may be spaced apart from the outlet 52. However, the location closer to the outlet 52 is preferred because the flow rate of the reformed gas is high and the mixing efficiency is good.

The shift reaction inlet gas flow path 31 is a flow path for passing the inlet gas to the low temperature shift unit 13 and is configured with the peripheral wall 42 and a peripheral wall 61. The peripheral wall 61 has a cylindrical shape (a circular tubular shape) with the axis G as the center axis. The shift reaction inlet gas flow path 31 is formed of a gap between the peripheral wall 41 and the peripheral wall 61. The peripheral wall 61 is connected to a lower end wall 62 arranged at a distance from the lower end wall 43 of the low temperature shift unit 13 downward. The reformed gas that passes through the shift reaction inlet gas flow path 31 flows so as to go around the outside of the lower end wall 43 and the peripheral wall 41 of the low temperature shift unit 13 and is supplied to the low temperature shift unit 13 from the upper side thereof. The reformed gas supplied to the low temperature shift unit 13 is not limited to such a flow, and the reformed gas may be supplied through any flow path to the low temperature shift unit 13. Therefore, the shift reaction inlet gas flow path 31 is not necessarily provided in such an arrangement.

The exhaust gas flow path 32 is a flow path for passing the exhaust gas from the burner and is formed with the peripheral wall 61, a peripheral wall 63, a lower end wall 64, and an outer peripheral wall 66. The peripheral wall 63 has a cylindrical shape (circular tubular shape) with the axis G as the center axis. The exhaust gas flow path 32 is formed of a gap between the peripheral wall 61 and the peripheral wall 63. The lower end portion of the peripheral wall 63 is connected to the annular lower end wall 64 at a distance from the lower end wall 62 upward. The lower end wall 64 and the end portion of the outer circumferential side of the lower end wall 62 are closed by the cylindrical outer peripheral wall 66. The exhaust gas flow path 32 allows the exhaust gas supplied from the reforming unit 6 to pass from the upper side to the lower side.

The water vaporization flow path 33 is a flow path for passing water or steam of the vaporization unit 9 and is configured with the peripheral wall 63, the lower end wall 64, a peripheral wall 67, and an upper end wall 68. The peripheral wall 67 has a cylindrical shape (circular tubular shape) with the axis G as the center axis. The water vaporization flow path 33 is formed of a gap between the peripheral wall 63 and the peripheral wall 67. The lower end portion of the peripheral wall 67 is connected to the lower end wall 64. The lower end wall 64 is shaped like a disk extending radially and is continuous to the respective lower ends of the peripheral wall 63 and the peripheral wall 67 to close the lower side of the water vaporization flow path 33. The upper end wall 68 is shaped like a disk extending radially and is continuous to the respective upper ends of the peripheral wall 63 and the peripheral wall 67 to close the upper side of the water vaporization flow path 33. The water piping 17y is connected in the vicinity of the lower end of the peripheral wall 67. The water vaporization flow path 33 allows water supplied from the water piping 17y to pass from the lower side to the upper side. The water vaporization flow path 33 has a water layer on the lower side and a steam layer on the upper side because water is vaporized in the water vaporization flow path 33. The position of the level of water in the water vaporization flow path 33 is not specifically limited but preferably is higher than the upper end position of the preferential oxidation catalyst 8x. The upper end of the water vaporization flow path 33, that is, the position of the upper end wall 68 is not specifically limited and may be arranged at a position even higher than the position illustrated in the drawing.

The preferential oxidation inlet gas flow path 34 is a flow path for passing the inlet gas to the preferential oxidation unit 8 and is configured with the peripheral wall 67, a peripheral wall 69, a lower end wall 71, and an upper end wall 72. The lower end wall 71 is shaped like a disk extending radially and is provided on the outer circumferential surface of the peripheral wall 67. The lower end wall 71 is arranged above the connection position of the water piping 17y. The upper end wall 72 is shaped like a disk extending radially and is provided on the outer circumferential surface of the peripheral wall 67. The peripheral wall 69 has a cylindrical shape (circular tubular shape) with the axis G as the center axis and extends between the lower end wall 71 and the upper end wall 72. The lower end of the peripheral wall 69 is spaced apart from the lower end wall 71, and the upper end of the peripheral wall 69 is spaced apart from the upper end wall 72. The preferential oxidation inlet gas flow path 34 is formed of a gap between the peripheral wall 67 and the peripheral wall 69. The end portion on the outer circumferential side of the lower end wall 71 and the end portion on the outer circumferential side of the upper end wall 72 are coupled together with a peripheral wall 73. The peripheral wall 73 has a cylindrical shape (circular tubular shape) with the axis G as the center axis on the outer circumferential side of the peripheral wall 69. The reformed gas piping 14x is connected in the vicinity of the lower end of the peripheral wall 73. The preferential oxidation inlet gas flow path 34 allows the reformed gas supplied from the reformed gas piping 14x to pass from the lower side to the upper side. The positions of the upper end and the lower end of the preferential oxidation inlet gas flow path 34, that is, the positions of the upper end wall 72 and the lower end wall 71 are not limited to the positions illustrated in the drawing.

The preferential oxidation unit 8 includes the peripheral wall 69, the peripheral wall 73, a punching plate 74, a punching plate 76, a lower end wall 77, and the preferential oxidation catalyst 8x. A gap to be filled with the preferential oxidation catalyst 8x is formed between the peripheral wall 69 and the peripheral wall 73. The punching plate 74 is shaped like a disk extending radially and is provided between the peripheral wall 69 and the peripheral wall 73 at a position on the lower end side of the peripheral wall 69. The punching plate 76 is shaped like a disk extending radially and is provided between the peripheral wall 69 and the peripheral wall 73 at a position on the upper end side of the peripheral wall 69. The preferential oxidation catalyst 8x is filled in a space formed with the peripheral wall 69, the peripheral wall 73, the punching plate 74, and the punching plate 76. The lower end wall 77 is shaped like a disk extending radially and is continuous to the lower end of the peripheral wall 69 and the inner circumferential surface of the peripheral wall 73 to close the lower end side of the preferential oxidation unit 8. The reformed gas piping 14y is connected to the peripheral wall 73 at a position between the lower end wall 77 and the punching plate 74. The preferential oxidation unit 8 may be configured without a punching plate.

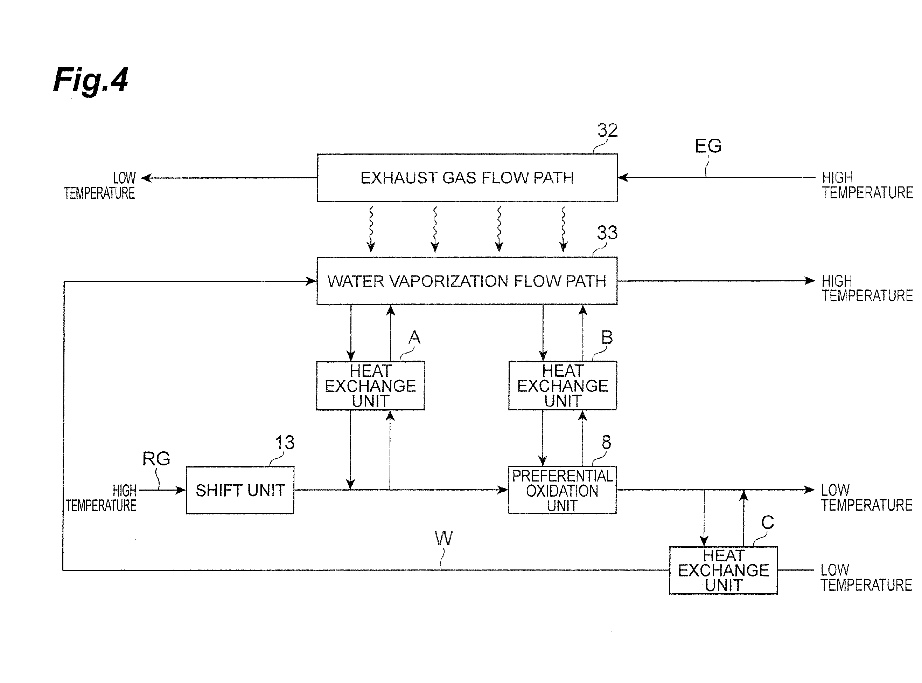

The flows of the reformed gas RG, water (or steam) W, the exhaust gas EG, and the flow of heat at the periphery of the preferential oxidation unit 8 will now be described with reference to Fig. 3 and Fig. 4. Fig. 4 is a block diagram illustrating the flow of heat around the preferential oxidation unit 8 illustrated in Fig. 3.

First, the reformed gas RG passes through the shift reaction inlet gas flow path 31 to be supplied to the low temperature shift unit 13. The reformed gas RG having a carbon monoxide concentration reduced with the low temperature shift catalyst 13x is collected in one place toward the outlet 52 in the internal space 51. The temperature of the reformed gas RG that flows out of the low temperature shift unit 13 is 150°C to 250°C as described above. The reformed gas RG collected at the outlet 52 passes downward toward the pipe portion 14a of the reformed gas piping 14x. Here, the reformed gas RG collides against the air supplied upward from the air piping 15 and mixes with the air efficiently. The reformed gas RG mixed with the air passes through the reformed gas piping 14x to be supplied to the preferential oxidation inlet gas flow path 34.

The reformed gas RG supplied to the preferential oxidation inlet gas flow path 34 passes through the preferential oxidation inlet gas flow path 34 from the lower side to the upper side. Here, the reformed gas RG is subjected to heat exchange with water (or steam) in the water vaporization flow path 33 adjacent to the inner circumferential side of the preferential oxidation inlet gas flow path 34. Accordingly, the reformed gas RG supplies heat to the water vaporization flow path 33 to be cooled, if it is hotter than necessary, while being kept at a proper temperature so as not to become colder than necessary. In other words, the preferential oxidation inlet gas flow path 34 can function as a heat exchange unit A that performs heat exchange with the water vaporization flow path 33. The temperature of the reformed gas RG is kept from 100°C to 200°C immediately before flowing into the preferential oxidation unit 8.

The carbon monoxide in the reformed gas RG flowing into the preferential oxidation unit 8 is removed by the preferential oxidation catalyst 8x. Here, heat is generated from the preferential oxidation catalyst 8x because the preferential oxidation reaction is an exothermic reaction. Here, the preferential oxidation unit 8 can perform heat exchange with the water vaporization flow path 33 through the preferential oxidation inlet gas flow path 34. This prevents the vicinity of the inlet of the preferential oxidation unit 8 from becoming hotter than necessary. Here, the preferential oxidation inlet gas flow path 34 can function as a heat exchange unit B that performs heat exchange between the preferential oxidation unit 8 and the water vaporization flow path 33. The temperature of the reformed gas RG is set from 100°C to 180°C immediately after flowing out of the preferential oxidation unit 8. The reformed gas RG flowing out of the preferential oxidation unit 8 is subjected to heat exchange by the heat exchange unit 16 with water supplied to the water vaporization flow path 33. Here, the heat exchange unit 16 functions as a heat exchange unit C illustrated in Fig. 4. The reformed gas RG is finally set from 80°C to 130°C. As described above, the preferential oxidation inlet gas flow path 34 can function as two heat exchange units A and B although it is a single flow path.

Water W is supplied from the water piping 17x and receives the heat from the reformed gas RG by means of the heat exchange unit 16. The water W subjected to heat exchange in the heat exchange unit 16 flows into the water vaporization flow path 33 and flows from the lower side toward the upper side. Here, the water W can receive heat from the exhaust gas EG in the exhaust gas flow path 32 adjacent to the water vaporization flow path 33 on the inner circumferential side. The water W can also receive the heat of the reformed gas RG from the preferential oxidation inlet gas flow path 34 functioning as the heat exchange unit A. Furthermore, the water W can receive heat resulting from the preferential oxidation reaction from the preferential oxidation inlet gas flow path 34 functioning as the heat exchange unit B. The temperature of the water W (or steam) is set from 80°C to 500°C in a region in contact with the preferential oxidation inlet gas flow path 34, in particular, from 100°C to 300°C in the vicinity of the inlet of the preferential oxidation unit 8. The water W is vaporized while passing through upward to become steam and is directed to the reforming unit 6.

The operation and effects of the hydrogen production apparatus 1 and the fuel cell system 100 according to the present embodiment will now be described.

In the hydrogen production apparatus 1 according to the present embodiment, the preferential oxidation inlet gas flow path 34 through which the reformed gas RG passes is arranged between the preferential oxidation unit 8 and the water vaporization flow path 33. With such a configuration, the preferential oxidation unit 8 is not in direct contact with the vaporization flow path 33 through which water or steam flows, and the preferential oxidation inlet gas flow path 34 can function as a heating medium. This prevents the temperature of the preferential oxidation catalyst 8x in the preferential oxidation unit 8 from becoming too low. The preferential oxidation inlet gas flow path 34 allows pass of the reformed gas RG supplied to the preferential oxidation unit 8, that is, the inlet gas of the preferential oxidation unit 8. Accordingly, the reformed gas RG as the inlet gas of the preferential oxidation unit 8 supplies heat to water or steam in the water vaporization flow path 33 to be cooled if the reformed gas RG is hotter than necessary while being kept at a proper temperature with water or steam in the water vaporization flow path 33 so as not to become colder than necessary. Accordingly, the reformed gas RG that has passed through the preferential oxidation inlet gas flow path 34 is supplied to the preferential oxidation unit 8 in a state of being kept at an optimum temperature. As described above, in the hydrogen production apparatus 1 according to the present embodiment, the temperature of the preferential oxidation unit 8 can be kept at an optimum temperature with a simple structure without using an external heating unit such as a heater, thereby prolonging the lifetime of the preferential oxidation catalyst.

In the hydrogen production apparatus 1 according to the present embodiment, the exhaust gas flow path 32 is arranged at a position adjacent to the water vaporization flow path 33 on the side thereof opposite to the preferential oxidation inlet gas flow path 34. Since the exhaust gas flow path 32 is arranged at a position adjacent to the water vaporization flow path 33, water in the water vaporization flow path 33 can receive heat from the high-temperature exhaust gas EG and can vaporize efficiently. Furthermore, the water vaporization flow path 33 can keep the reformed gas RG at an optimum temperature reliably without overcooling the reformed gas RG in the preferential oxidation inlet gas flow path 34.

In the hydrogen production apparatus 1 according to the present embodiment, the low temperature shift unit 13 has the outlet 52 through which the reformed gas RG after the shift reaction passes. The air piping 15 can supply the air to the reformed gas RG passing through the outlet 52 from the direction that opposes the flow of the reformed gas RG The reformed gas RG is collected at the outlet 52 when flowing out of the low temperature shift unit 13. Here, the air piping 15 can supply the air to the reformed gas RG collected at the outlet 52. Accordingly, the air and the reformed gas RG can be mixed efficiently. Furthermore, since the air piping 15 can supply the air from the direction that opposes the flow of the reformed gas RG, the reformed gas collides against the air and mixes with the air even more efficiently.

The fuel cell system 100 includes the hydrogen production apparatus 1 described above and therefore achieves the aforementioned effect of keeping the temperature of the preferential oxidation unit 8 at an optimum temperature with a simple structure without using an external heating unit such as a heater.

Although the preferred embodiment of the present invention has been described above, the hydrogen production apparatus and the fuel cell system according to the present invention are not limited to the hydrogen production apparatus 1 above and the fuel cell system 100 above according to the embodiment and may be modified or applied to any other system within a range that does not change the spirit of the invention described in each claim.

For example, the configuration of the hydrogen production apparatus depicted in the foregoing embodiment is illustrated by way of example. The configuration of a part excluding the positional relation between the preferential oxidation unit 8, the preferential oxidation inlet gas flow path 34, and the water vaporization flow path 33 is not specifically limited, and the positional relation or configuration of the flow paths, piping or the components may be modified as appropriate. For example, a different structure of the reforming unit may be employed, or the desulfurization unit 2 may be eliminated.

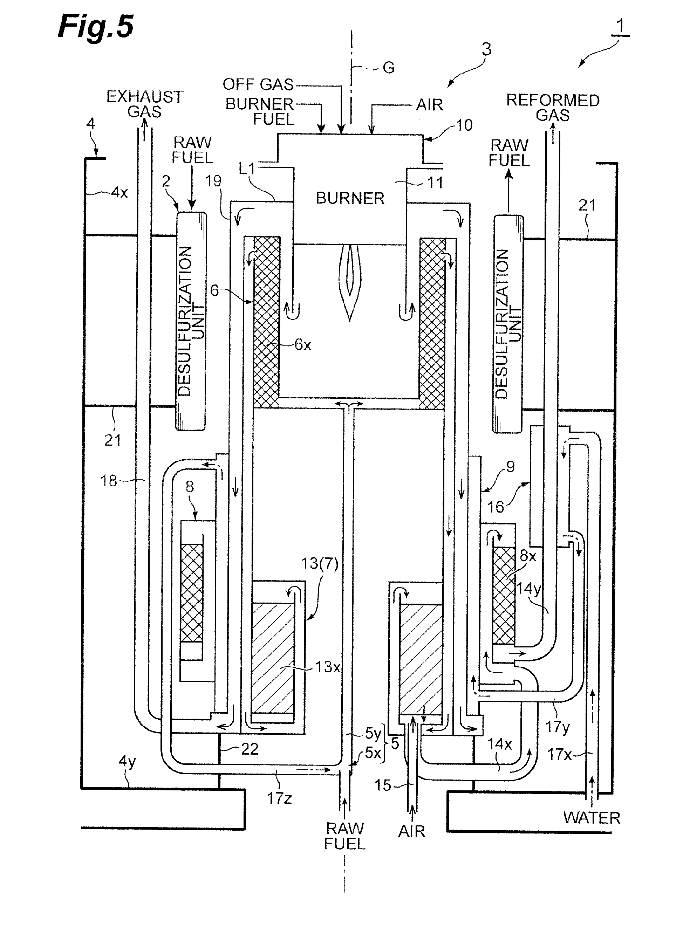

The foregoing embodiment includes the high temperature shift unit 12 and the low temperature shift unit 13 for a shift reaction of carbon monoxide in the reformed gas. However, only the low temperature shift unit 13 may be included as illustrated in Fig. 5.

The "tubular shape" in the foregoing description includes not only an approximately cylindrical shape but also an approximately polygonal tubular shape. The approximately cylindrical shape and the approximately polygonal tubular shape mean a cylindrical shape and a polygonal tubular shape in a broader sense, including the ones generally equal to a cylindrical shape and a polygonal tubular shape and the ones at least including part of a cylindrical shape and a polygonal tubular shape.

### Industrial Applicability

The present invention is applicable to a hydrogen production apparatus and a fuel cell system.

### Reference Signs List

1... hydrogen production apparatus, 10... burner, 20... cell stack (fuel cell stack), 8,... preferential oxidation unit, 13... shift unit, 15 air piping (air supply unit), 32... exhaust gas flow path, 33... water vaporization flow path (vaporization flow path), 34... preferential oxidation inlet gas flow path (gas flow path), 52... outlet, 100... fuel cell system, G... axis.

## Claims

1. A hydrogen production apparatus comprising:
a preferential oxidation unit preferentially oxidizing carbon monoxide in a reformed gas containing hydrogen;
a vaporization flow path passing water to generate steam; and
a gas flow path through which the reformed gas passes, wherein
the gas flow path is arranged between the preferential oxidation unit and the vaporization flow path, and
the reformed gas passes through the gas flow path and thereafter flows into the preferential oxidation unit.

2. The hydrogen production apparatus according to Claim 1 further comprising an exhaust gas flow path through which an exhaust gas from a burner for use to generate the reformed gas passes, wherein
the exhaust gas flow path is arranged at a position adjacent to the vaporization flow path on a side opposite to the gas flow path.

3. The hydrogen production apparatus according to Claim 1 or 2 further comprising:
a shift unit removing carbon monoxide in the reformed gas through a shift reaction;, and
an air supply unit supplying air to the reformed gas directed from the shift unit to the preferential oxidation unit, wherein
the shift unit includes an outlet discharging the reformed gas after the shift reaction, and
the air supply unit supplies the air to the reformed gas flowing out of the outlet from a direction that opposes a flow of the reformed gas.

4. A fuel cell system comprising:
the hydrogen production apparatus according to any one of Claims 1 to 3; and
a fuel cell stack generating power using the reformed gas generated by the hydrogen production apparatus.
